# EUROPEAN PATENT SPECIFICATION

(11) **EP 3 530 685 B1**
(45) Date of publication and mention of the grant of the patent: **10.09.2025**
(21) Application number: 19156445.9
(22) Date of filing: 21.04.2016
(51) Int. Cl.: C08G 65/36, C08G 61/02, B22C 1/22

(54) **FOUNDRY BINDER SYSTEM WITH A LOW FORMALDEHYDE CONTENT AND PROCESS FOR OBTAINING IT**
GIESSEREIBINDEMITTELSYSTEME MIT GERINGEM FORMALDEHYDGEHALT UND VERFAHREN ZUR HERSTELLUNG DAVON
SYSTÈME DE LIANT DE FONDERIE AVEC UNE FAIBLE TENEUR EN FORMALDÉHYDE ET SON PROCÉDÉ D'OBTENTION

(30) Priority: 24.04.2015 IT UB20150307
(43) Date of publication of application: 28.08.2019
(62) Divisional of application: 16166464.4
(73) Proprietor: Cavenaghi SPA, 20045 Lainate (Milano) (IT)
(72) Inventor: Zennaro, Giorgio, 21047 Saronno (VA) (IT); Stroppolo, Gianni Claudio, 20045 Lainate (MI) (IT)
(74) Representative: Dragotti & Associati S.R.L.

(56) References cited:
- EP-A1- 3 056 296
- US-A- 5 741 914
- US-A1- 2014 048 740
- DATABASE WPI Week 201353, Derwent World Patents Index; AN 2013-E47362, XP002792042

## Description

The object of the present invention is a method for obtaining furan resins, useful for the preparation of binder systems comprising such resins in admixture with silica sand, or other granular substances, for the production of foundry cores and molds, or for the production of refractory bricks or refractory masses aimed to the metallurgical or glassmaking industry. The furan resins obtainable by the method of the invention are characterized by a low free formaldehyde content, which entails the advantage of reduced formaldehyde emissions under the conditions of use of the resins in the foundry.

### State of the art

The foundry binder systems mentioned above usually consist of two or more components, which are mixed with sand or other granular masses in order to then produce the cores and molds in which or around which the molten metal will be poured.

No-bake furan binder systems, described for example in pages 30-34 of the publication "No-bake core & molds" published in 1980 by the American Foundrymen's Society, incorporated herein by reference, have spread starting from 1960s and are still widely used. Such binder systems consist of two liquids (furan resin and acid hardener) which, when added to the sand, allow to obtain core and molds suitable for the production of ferrous and non-ferrous metal castings, without the need of heat.

The furan resin consists essentially of furfuryl alcohol more or less condensed with formaldehyde, optionally modified with urea resins, phenol resins, solvents and various additives.

Furan resins which can be used in no-bake binder systems are, for example, described in pages from B320-6 to B320-15 of the publication "Manuel des sables à prise chimique", published in 1993 by the Centre Technique des Industries de la Fonderie, incorporated herein by reference.

The acid hardener required to cause the curing of the sand/resin mixture usually consists of one or more organic and/or inorganic acids in an aqueous or hydroalcoholic solution.

The most frequently used organic acids are benzenesulfonic acid, toluenesulfonic acid, xylenesulfonic acid, cumenesulfonic acid, or mixtures thereof. Among these, toluenesulfonic acid is by far the most used.

Resins to be used as foundry binders, particularly in a no-bake process, should ideally meet the following requirements:
- low viscosity, to allow a fast and homogeneous coating of the sand grains during the mixture preparation process;
- high reactivity, in order to require the addition of a small quantity of hardener, even in the in the cold season, as said hardener, which is usually a sulfonic acid in aqueous solution, is a potential source of casting defects due to sulfur;
- reduced content of water and inert solvents with respect to the acid hardener, as they can slow the through cure process, i.e. of the core or mold areas not exposed to air;
- high strength, in order to minimize the addition of binder;
- minimum content of hazardous components, such as furfuryl alcohol, formaldehyde, phenols and/or glycols (in order to receive the least severe possible hazard classification);
- least severe possible hazard classification;
- as low as possible bureaucratic requirements linked to the storage (in view of the European Directive 82/501/EC, so-called "Seveso Directive", and subsequent editions thereof).

Furan resins are essentially mixtures of conversion products of an aldehyde, usually formaldehyde, with furfuryl alcohol, optionally modified with urea, melamine, phenol resins.

Furan resins further contain various additives, exemplified hereinafter, having, for example, the purpose of improving the flowability and the shelf life of the mixture, reducing the development of odors, increasing the strength of cores and forms, and improving the shake-out of the castings.

In addition to additives, intentionally added by the manufacturer, the furan resins for foundry contain at least two additional undesired hazardous substances: free furfuryl alcohol and formaldehyde remained at the end of the polymerization process.

With the entry into force of the EU Regulation 1272/2008/EC (1 December 2010), the furan resins containing furfuryl alcohol at or above 25% are classified as toxic resins. The results of additional inhalation toxicity studies of furfuryl alcohol, required by REACH to the consortium of furfuryl alcohol registrants, have subsequently reduced the limit from 25% to 13.5%.

Therefore, all of the resins described in the examples of the present application, whether according to the invention or not, take into account the limits set by the above mentioned 1272/2008/EC Regulation and subsequent modifications thereof, and thus contain, as appropriate, less than 25% of furfuryl alcohol or less of 13.5% of furfuryl alcohol. However this characteristic must not constitute a limit of the present invention.

The European Union Regulation No. 605/2014/EC has tightened the classification of formaldehyde, making it "Category 1B carcinogen". As a result, the resins containing formaldehyde at or above 0,1%, where this percentage is a percentage by weight, based on the total weight of the resin, are classified "Alleged carcinogenic to humans based on animal studies": the label must bear the risk phrase "May cause cancer". Regardless of any consideration on the suitability of the existing analytical methods to measure with accuracy a formaldehyde content of the order of magnitude of 0.1% in a resin, the development of foundry binder mixtures with an especially low content and emission of formaldehyde has become extremely important.

In the experiments reported in the present patent application, the free formaldehyde content was determined by the method AN006 (6), revision. No. 2 of 08/04/2015 based on the reaction of formaldehyde with sodium sulfite. Said method is derived from the publication "Frederic J. Walker, "Formaldehyde", Third Edition, p. 486, Robert E. Krieger Publishing Corporation", and the method EN ISO 11402: 2004, incorporated herein by reference.

The methods known to date for reducing the formaldehyde content in furan resins contemplate that the unreacted formaldehyde, therefore remained free during the curing process with furfuryl alcohol, is combined with reactive compounds which are able to abate it (formaldehyde scavengers).

Such known methods include:
- the reaction of formaldehyde with urea and derivatives, as described in US3590100;
- the reaction of formaldehyde with melamine, as described in US5708121;
- the reaction of formaldehyde with alkanolamines, as described in US5795934;
- the reaction of formaldehyde with amino acids, as described in EP2621973;
- the reaction of formaldehyde with functional phenolic compounds, such as, for example, phenol, resorcinol, 4,4'-isopropylidenediphenol, as described in WO2012/080454;
- low-emission, cold-setting binders based on furan resins and designed for use in the foundry industry are disclosed in US-A-2014/0048740.

It should however be noted, that the resins described in the first four points mentioned above, usually contain a not negligible amount of nitrogen, which can be a source of casting defects. Therefore, the furan resins in which formaldehyde was abated according to these methods, are not suitable for the production of quality castings, and are especially not suitable for the production of steel castings.

Should the use of such methods be desired anyway, but with lower nitrogen content, it would not be possible to obtain a furan resin with a free formaldehyde content low enough to be compliant with the specifications that allow not to classify the obtained resin as toxic and carcinogenic.

The furan resins obtained by the last method mentioned above (WO2012/080454) contain one or more hazardous components, such as phenol, resorcinol, 4,4'-isopropylidenediphenol, in addition to those already present. Furthermore, this method is usually less effective than the methods of the first four points for formaldehyde abatement.

Therefore, it is felt the need for a new method for the production of furan resins with formaldehyde content as low as possible and close to zero, preferably less than 0.1% by weight, based on the total weight of the furan resin.

### Description of the invention

A method for the production of furan resins was then surprisingly found, which is useful for the preparation of binder systems comprising such resins in admixture with silica sand, or other granular substances, for the production of foundry cores and molds, or for the production of refractory bricks or refractory masses aimed to the metallurgical or glassmaking industry. The furan resins obtainable by the method of the invention are characterized by a low free formaldehyde content, which entails the advantage of reduced formaldehyde emissions under the conditions of use of the resins in the foundry and other industries of use.

The method of the present invention comprises the following steps:
a) reaction between furfuryl alcohol and formaldehyde in the presence of an acid catalyst;
b) heat treatment with a strong base of the condensation polymer formed in step a), performed at a temperature comprised between 90° C and 115° C;
c) addition of urea;
and does not comprise the addition of 4,4'-isopropylidenediphenol.

The heat treatment with a strong base of the condensation polymer formed in step a), after the reaction in an acid environment with furfuryl alcohol and formaldehyde, allows the abatement of the unreacted formaldehyde according to Cannizzaro disproportionation reaction:

2 HCHO + NaOH → HCOONa + CH₃OH ↑

Being the Cannizzaro reaction in step b) carried out at a temperature comprised between 90° C and 115° C, the formed methanol, having a boiling temperature of 64° C, is easily removed from the reaction environment by evaporation.

However, the Cannizzaro reaction is not performed to eliminate the entire amount of formaldehyde present, otherwise the performance of the obtained furan resin would be excessively depressed. At the end of the Cannizzaro reaction, it is therefore preferable that the free formaldehyde, measured by the method AN006(6) already mentioned above, is comprised between 0.3% and 0.6% by weight, based on the total weight of the furan resin obtained.

The remaining amount of formaldehyde is then eliminated by the addition of urea in step c), which is used in a stoichiometric amount with respect to the remaining formaldehyde, to obtain furan resins with a low percentage content of formaldehyde, i.e. furan resins with percentages of formaldehyde of less than 0.1% by weight, based on the weight of the resin.

The acid catalyst in step a) is preferably a mixture of at least one acid and a salt thereof, in order to create an acidic environment.

In step a), the pH of the reaction environment is preferably comprised between 4.2 and 4.7.

Suitable acid catalysts for the condensation performed in step a) are, for example, organic acids with a pKa at 25° C greater than or equal to 2.5 and/or salts thereof and/or mixtures thereof, preferably with a pKa at 25° C comprised in the range from 2.75 to 6, and still more preferably comprised in the range between 3 and 5, such as those described in WO2012/080454. Preferred examples of these acids are citric acid, lactic acid, benzoic acid, phthalic acid, 1-malic acid, d-tartaric acid, glycolic acid, 2,4-dihydroxybenzoic acid, salicylic acid and/or their salts and/or mixtures thereof.

Other suitable acid catalysts for the condensation in step a) are inorganic acids, possibly with a pKa at 25° C lower than 2.5, and/or salts thereof and/or mixtures thereof.

A preferred acid catalyst for step a) is an acid alkyl ester of phosphorous acid and/or phosphoric acid and/or a salt thereof, as stated in the patent application in the name of Cavenaghi S.p.A., filed on February 13, 2015 with the number MI2015A000206.

Particularly preferred is an acid alkyl ester of phosphorous acid and/or phosphoric acid with a pKa at 25° C lower than 2.5.

Further preferred is a C₁-C₈ acid alkyl ester of phosphorous acid and/or phosphoric acid, optionally with a pKa at 25° C lower than 2.5.

A preferred example is an alkyl ester of phosphorous acid and/or phosphoric acid, characterized in that said alkyl ester of phosphorous acid and/or phosphoric acid is a diester, preferably dimethyl phosphate, diethyl phosphate, dipropyl phosphate, dibutyl phosphate, bis(2-ethylhexyl) phosphate, dimethyl phosphite, diethyl phosphite, dipropyl phosphite or dibutyl phosphite, even more preferably dibutyl phosphite, dibutyl phosphate or bis(2-ethylhexyl) phosphate.

Step a) is preferably performed at a temperature comprised between 100° C and 140° C.

According to a preferred aspect, the furan resin obtained in step a) has a content of formaldehyde conversion products equal at least to 35% by weight, based on the weight of the resin.

According to a further preferred aspect, the furan resin obtained in step a) has a water content lower than 20% by weight, based on the weight of the resin.

At the end of step a), furfuryl alcohol is present in an amount that depends on the specifications of the furan resin to be obtained: the furfuryl alcohol content is preferably equal to approximately 25% by weight, based on the weight of the material contained in the reactor, or it is lower than this value. Still more preferably, the furfuryl alcohol content is lower than 13.5% by weight, preferably comprised between 11% and 13.5% by weight, based on the weight of the material contained in the reactor.

It should be considered that the amount of furfuryl alcohol that remains in the resulting resin must be lower than 25% by weight, preferably lower than 13.5% by weight, based on the weight of the finished resin.

At the end of step a), the formaldehyde is preferably present in an amount comprised between 3% and 6% by weight, based on the weight of the material contained in the reactor at this step of the manufacturing process.

According to a preferred aspect, the strong base used in step b) is selected from sodium hydroxide, potassium hydroxide, or calcium hydroxide, and it is preferably sodium hydroxide.

Particularly preferred are 30% sodium hydroxide or 48% potassium hydroxide aqueous solutions. However, more concentrated solutions may also be used, which have the disadvantage of requiring a heat storage, or more diluted solutions, which have the disadvantage of introducing more water in the finished resin.

Preferably, the strong base in step b) is added in an amount comprised between 35% and 80% of the stoichiometric amount of the formaldehyde present.

According to a further preferred aspect, the step b) is performed at the spontaneous reflux temperature of the reacting mixture at atmospheric pressure. This temperature is inversely proportional to the water content in step b).

Preferably, said step b) is performed at a temperature comprised between 90° C and 115° C, preferably comprised between 103° C and 105° C

The strong base is charged slowly in order to adjust the strongly exothermic initial reaction, and it is allowed to continue until the spontaneous reflux temperature at atmospheric pressure is reached.

Preferably, the reaction is carried out until the formaldehyde has not decreased to a value lower than 0.20% by weight, based on the weight of the product contained in the reactor.

The addition of the strong base causes a strongly alkaline environment that gradually attenuates with the progression of the Cannizzaro reaction. At the end of step b), the pH is preferably comprised between 7 and 10.

In step c), urea is added to abate the last residues of formaldehyde remained.

According to a preferred aspect, the amount of urea added in step c) is not more than 4.3% by weight, preferably not more than 2.2% by weight, based on the weight of the finished resin.

Therefore, according to this preferred aspect, with the addition of urea it is added to the finished resin a nitrogen content of not more than 2% by weight, preferably not more than 1% by weight, based on the weight of the finished resin.

This addition of urea has no influence on the nitrogen content in the finished product, in contrast to the methods described in the art.

The urea used, preferably in the form of beads, so as to be less subject to the formation of lumps during storage, is preferably of technical grade with a nitrogen content of 46%.

According to a further preferred aspect, in step c) the urea is added at a temperature comprised between 50° C and 60° C.

Preferably, the urea is allowed to react for a time of about 1 hour.

The decrease of formaldehyde in the resin to the desired value is observed in a time of between 10 and 15 hours, preferably in 12 hours.

This is followed by a cooling step (step d) to discharge the thermosetting resin from the reactor, which is carried out until room temperature is reached, where the term "room temperature" is intended to mean a temperature approximately comprised between about 0 e +40° C, preferably between +15 e +30° C.

Still more preferably, the resin is cooled down to 35° C before being discharged from the reactor.

According to a further aspect, the method of the invention may comprise a step of addition of additives (step (e)), which is preferably performed during the cooling step (step d)) at a temperature lower than 40° C; such additives may be selected from:
- compounds able to increase the adhesion between the binder system and the grains of sand, such as, for example, silane compounds, among which preferably 3-aminopropyltriethoxysilane, 3-aminopropylmethyldiethoxysilane, 3-glycidoxypropyltrimethoxysilane;
- organic compounds able to decrease the curing rate of the sand/resin/hardener mixture, such as, for example, glycols, preferably C₂-C₁₂ glycols;
- compounds able to decrease the viscosity of the resin, such as, for example, alcohols, preferably C₁-C₄ alcohols, even more preferably ethanol;
- conversion products of furfuryl alcohol with aldehydes other than formaldehyde, such as, for example, acetaldehyde, propionaldehyde, butyraldehyde, acrolein, crotonaldehyde, benzaldehyde, salicylaldehyde, cinnamaldehyde, and glyoxal, preferably conversion products of furfuryl alcohol and glyoxal;
- organic compounds comprising one or more H₂N groups and/or one or more HN groups, such as, for example, urea and/or urea resins;
- benzylic alcohol;
- aldehydes with 2 or more carbon atoms (and therefore different from formaldehyde), such as, for example, acetaldehyde, propionaldehyde, butyraldehyde, acrolein, crotonaldehyde, benzaldehyde, salicylaldehyde, cinnamaldehyde, glyoxal or mixture thereof, preferably glyoxal.

Silane compounds are particularly preferred additives because they allow the use of the resins as foundry binders in a no-bake process. Silanes, in fact, allow to increase the strengths significantly.

Further particularly preferred additives are urea and/or urea resins.

Therefore, a preferred aspect of the present invention is a method comprising, in addition to steps a) to c) mentioned above, the steps d) cooling, and e) addition of additives, wherein to the obtained resin silane compounds are added as additives, among which, preferably, 3-aminopropyltriethoxysilane, 3-aminopropylmethyldiethoxysilane and/or 3-glycidoxypropyltrimethoxysilane.

Therefore, further objects of the invention are furan resins obtainable by the method of the invention.

Furan resins obtainable by the method mentioned above are fluid and, usually, do not require the addition of inert solvents (alcohols or glycols) in order to reduce the viscosity.

They are characterized by comprising nitrogen percentages lower than 2% by weight, and preferably lower than 1% by weight, based on the weight of the resin, and/or are characterized by comprising free formaldehyde percentages lower than 0.1% by weight, based on the weight of the resin, where the formaldehyde is measured by the analytical method AN006(6) already mentioned above.

According to a particularly preferred aspect, the resins of the invention have a formaldehyde conversion products content equal at least to 35% by weight, based on the weight of the resin.

According to a further preferred aspect, they have a water content lower than 20% by weight, based on the weight of the resin, preferably lower than 15% by weight, based on the weight of the resin.

The no bake furan resins produced according to the present invention are suitable to produce foundry core and molds of any ferrous or nonferrous metal type, without the risk of casting scrap due to nitrogen content.

They are also advantageous for the quality of the working environment of foundries, especially in view of the recent change in classification of formaldehyde.

A further object of the invention is the use of the furan resins obtainable by the method of the invention for the production of foundry binder mixtures, preferably for no bake foundry binder mixtures.

Objects of the invention are also the foundry binder mixtures, preferably for no bake foundry binder mixtures, comprising the furan resins obtainable by the method of the invention, and the foundry binder systems, preferably no-bake type, comprising or consisting of said foundry binder mixture together with an acid hardener.

The acid hardener may be an aqueous or hydroalcoholic solution having a pH at room temperature of less than 2, preferably less than 1. The above mentioned solution may contain one or more sulfonic acids, such as, for example, benzenesulfonic acid, toluenesulfonic acid, xylenesulfonic acid, cumenesulfonic acid, phenolsulfonic acid, methanesulfonic acid, optionally mixed with other organic or inorganic acids. The above mentioned solution may also contain orthophosphoric acid, alone or in admixture with sulfonic acids.

The binder system may be comprised of 0.2-0.8 parts by weight of acid hardener, and 0.6-1.5 parts by weight of binder mixture, preferably of 0.3-0.6 parts by weight of acid hardener and 0.7-1.2 parts by weight of binder mixture.

An object of the invention are also foundry cores and/or molds containing sand and/or other refractory material and a binder mixture according to what described above. Cores and/or molds according to the present invention may contain 0.2-0.8 parts by weight of acid hardener, 0.6-1.5 parts by weight of binder mixture, and 80-120 parts by weight of sand and/or other refractory material; preferably, they contain approximately 100 parts by weight of sand and/or other refractory material, 0.3-0.6 parts by weight of acid hardener, and 0.7-1.2 parts by weight of binder mixture.

An object of the invention is also a process for the production of foundry cores and/or molds, wherein an acid hardener is mixed with sand and/or other refractory material, at room temperature, together with the binder mixture according to what described above. Preferably, 80-120 parts by weight of sand are mixed with 0.2-0.8 parts by weight of said acid, and with 0.6-1.5 parts by weight of binder mixture; even more preferably, approximately 100 parts by weight of sand and/or other refractory material are mixed with 0.3-0.6 parts by weight of acid hardener, and 0.7-1.2 parts by weight of binder mixture.

The cores and/or molds obtainable according to this process are also among the objects of the present invention.

A further object of the invention is the use of the furan resins obtainable by the method of the present invention for the production of refractory bricks or refractory masses aimed to the metallurgical or glassmaking industry. In these industries, the resins object of the invention offer a higher carbon yield than the conventionally used binders (pitches and phenolic resins), and a low formaldehyde development during use.

Further objects of the invention are also the binder mixtures for the production of refractory bricks or refractory masses aimed to the metallurgical or glassmaking industry, comprising the furan resins obtained by the method of the present invention. Moreover, the binder systems for the production of refractory bricks or refractory masses aimed to the metallurgical or glassmaking industry, comprising the binder mixtures obtainable according to the invention and an acid hardener, are also a further object of the invention.

An object of the present invention is also a process for the production of refractory bricks or refractory masses aimed to the metallurgical or glassmaking industry, wherein an acid hardener is mixed with sand and/or other refractory material, at room temperature, together with a binder mixture according to what described above.

Finally, among the objects of the present invention are also the refractory bricks or refractory masses aimed to the metallurgical or glassmaking industry, obtainable according to the process of the invention.

The examples that follow are for illustrative purpose only, and are not intended to limit the scope of the present invention.

In examples 1 to 9 and 12 of the present patent application, the free formaldehyde content was determined by the method AN006 (6), revision. No 2 of 08/04/2015, based on the reaction of formaldehyde with sodium sulfite. This method is derived from the publication "Frederic J. Walker, "Formaldehyde", Third Edition, p. 486, Robert E. Krieger Publishing Corporation", and the method EN ISO 11402: 2004, incorporated herein by reference.

In the example 11 of the present patent application, the content of formaldehyde in air samples aspired during the curing of the resins of examples 1-9 was measured according to US EPA 11A method, *i.e*. according to the method routinely used for determining the concentration of formaldehyde in workplaces.

### Examples

**Example 1** - **Resin NS-1A** (not according to the invention: excess of formaldehyde abatement performed with urea).

### Recipe:

| | |
|---|---|
| a) Furfuryl alcohol | 388.37 g |
| b) Paraformaldehyde (89-91% formaldehyde) | 92.41 g |
| c) Water | 10.65 g |
| d) Sodium hydroxide, 30% aqueous solution | 0.34 g |
| e) Lactic acid, 80% aqueous solution | 8.23 g |
| f) Urea | 37.50 g |
| g) Sodium hydroxide, 30% aqueous solution | 7.50 g |
| h) 3-aminopropylmethyldiethoxysilane | 1.15 g |
| i) Water | 16.50 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 60° C
- Charge raw material f)
- Maintain at 50-60° C for 1 hour
- Adjust pH to a value greater than 7.0 with raw material g)
- Charge raw material h)
- Cool down to 35° C
- Charge raw material i)

The resin is clear and has the following characteristics:
- pH at 25° C: 7.2
- Viscosity at 20° C: 100 mPa.s
- Nitrogen (Kjeldahl): 3.1%
- Free furfuryl alcohol (G.C.): 22.4%
- Water (Karl Fischer): 11.3%
- Free formaldehyde: 0.60 %

**Example 2** - **Resin NS-1B** (not according to the invention: excess of formaldehyde abatement performed with 4,4'-isopropylidenediphenol and urea).

### Recipe:

| | |
|---|---|
| a) Furfuryl alcohol | 388.37 g |
| b) Paraformaldehyde (89-91% formaldehyde) | 92.41 g |
| c) Water | 10.65 g |
| d) Sodium hydroxide, 30% aqueous solution | 0.34 g |
| e) Lactic acid, 80% aqueous solution | 8.23 g |
| f) 4,4'-isopropylidenediphenol | 17.00 g |
| g) Potassium hydroxide, 48% aqueous solution | 11.80 g |
| h) Urea | 10.60 g |
| i) 3-aminopropylmethyldiethoxysilane | 1.15 g |
| j) Water | 16.40 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 80° C
- Charge raw materials f) g) and maintain at 80° C for 1 hour
- Cool down to 60° C
- Charge raw material h)
- Maintain at 50-60° C for 1 hour
- Charge raw material i)
- Cool down to 35° C
- Charge raw material j)

The resin is clear and has the following characteristics:
- pH at 25° C: 8.5
- Viscosity at 20° C: 140 mPa.s
- Nitrogen (Kjeldahl): 0.88%
- Free furfuryl alcohol (G.C.): 22.6%
- Water (Karl Fischer): 11.6%
- Free formaldehyde: 0.76 %

### Example 3 - Resin NS-1C (according to the invention)

### Recipe

| | |
|---|---|
| a) Furfuryl alcohol | 388.37 g |
| b) Paraformaldehyde (89-91% formaldehyde) | 92.41 g |
| c) Water | 10.65 g |
| d) Sodium hydroxide, 30% aqueous solution | 0.34 g |
| e) Lactic acid, 80% aqueous solution | 8.23 g |
| f) Sodium hydroxide, 30% aqueous solution | 25.00 g |
| g) Urea | 5.30 g |
| h) 3-aminopropylmethyldiethoxysilane | 1.10 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 100° C
- Slowly charge raw material f)
- Bring back to reflux
- Maintain the reflux (103-105° C) for 25'
- Cool down to 60° C
- Charge raw material g)
- Maintain at 50-60° C for 1 hour
- Charge raw material h)
- Cool down to 35° C

The resin is clear and has the following characteristics:
- pH at 25° C: 8.7
- Viscosity at 20° C: 140 mPa.s
- Nitrogen (Kjeldahl): 0.46%
- Free furfuryl alcohol (G.C.): 23.1%
- Water (Karl Fischer): 11.3%
- Free formaldehyde: 0.03 %

A second series of tests was then carried out using, for the condensation in an acidic environment, a different catalyst than the one used in the first series of tests.

**Example 4** - **Resin NS-3A** (not according to the invention: excess of formaldehyde abatement performed with urea).

### Recipe:

| | |
|---|---|
| a) Furfuryl alcohol | 388.37 g |
| b) Paraformaldehyde (89-91% formaldehyde) | 92.41 g |
| c) Water | 12.90 g |
| d) Sodium hydroxide, 30% aqueous solution | 1.26 g |
| e) Salicylic acid | 10.13 g |
| f) Urea | 37.88 g |
| g) Sodium hydroxide, 30% aqueous solution | 7.96 g |
| h) 3-aminopropylmethyldiethoxysilane | 1.16 g |
| i) Water | 21.72 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 60° C
- Charge raw material f)
- Maintain at 50-60° C for 1 hour
- Adjust pH to a value greater than 7.0 with raw material g)
- Charge raw material h)
- Cool down to 35° C
- Charge raw material i)

The resin is clear and has the following characteristics:
- pH at 25° C: 7.8
- Viscosity at 20° C: 120 mPa.s
- Nitrogen (Kjeldahl): 3.07%
- Free furfuryl alcohol (G.C.): 22.9%
- Water (Karl Fischer): 13.7%
- Free formaldehyde: 0.17 %

**Example 5** - **Resin NS-3B** (not according to the invention: excess of formaldehyde abatement performed with 4,4'-isopropylidenediphenol and urea).

### Recipe:

| | |
|---|---|
| a) Furfuryl alcohol | 388.37 g |
| b) Paraformaldehyde (89-91% formaldehyde) | 92.41 g |
| c) Water | 12.90 g |
| d) Sodium hydroxide, 30% aqueous solution | 1.26 g |
| e) Salicylic acid | 10.13 g |
| f) 4,4'-isopropylidenediphenol | 17.17 g |
| g) Potassium hydroxide, 48% aqueous solution | 11.82 g |
| h) Urea | 10.71 g |
| i) 3-aminopropylmethyldiethoxysilane | 1.16 g |
| j) Water | 19.60 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 80° C
- Charge raw materials f) e g) and maintain at 80° C for 1 hour
- Cool down to 60° C
- Charge raw material h)
- Maintain at 50-60° C for 1 hour
- Charge raw material i)
- Cool down to 35° C
- Charge raw material j)

The resin is clear and has the following characteristics:
- pH at 25° C: 9.5
- Viscosity at 20° C: 150 mPa.s
- Nitrogen (Kjeldahl): 0.91%
- Free furfuryl alcohol (G.C.): 22.2%
- Water (Karl Fischer): 13.3%
- Free formaldehyde: 0.33%

### Example 6 - Resin NS-3C (according to the invention)

### Recipe:

| | |
|---|---|
| a) Furfuryl alcohol | 388.37 g |
| b) Paraformaldehyde (89-91% formaldehyde) | 92.41 g |
| c) Water | 12.90 g |
| d) Sodium hydroxide, 30% aqueous solution | 1.26 g |
| e) Salicylic acid | 10.13 g |
| f) Sodium hydroxide, 30% aqueous solution | 25.25 g |
| g) Urea | 5.35 g |
| h) 3-aminopropylmethyldiethoxysilane | 1.11 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 100° C
- Slowly charge raw material f)
- Bring back to reflux
- Maintain at reflux (103-105° C) for 25'
- Cool down to 60° C
- Charge raw material g)
- Maintain at 50-60° C for 1 hour
- Charge raw material h)
- Cool down to 35° C

The resin is clear and has the following characteristics:
- pH at 25° C: 9.6
- Viscosity at 20° C: 200 mPa.s
- Nitrogen (Kjeldahl): 0.46%
- Free furfuryl alcohol (G.C.): 23.2%
- Water (Karl Fischer): 13.4%
- Free formaldehyde: 0.01 %

**Example 7** - **Resin NS-2A** (not according to the invention: excess of formaldehyde abatement performed with urea).

### Recipe:

| | |
|---|---|
| a) Furfuryl alcohol | 388.37 g |
| b) Paraformaldehyde (89-91% formaldehyde) | 92.41 g |
| c) Water | 2.76 g |
| d) Sodium hydroxide, 30% aqueous solution | 3.10 g |
| e) Dibutyl phosphate | 5.19 g |
| f) Urea | 36.89 g |
| g) Sodium hydroxide, 30% aqueous solution | 1.38 g |
| h) 3-aminopropylmethyldiethoxysilane | 1.13 g |
| i) Water | 28.33 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 60° C
- Charge raw material f)
- Maintain at 50-60° C for 1 hour
- Adjust pH to a value greater than 7.0 with raw material g)
- Charge raw material h)
- Cool down to 35° C
- Charge raw material i)

The resin is clear and has the following characteristics:
- pH at 25° C: 7.7
- Viscosity at 20° C: 110 mPa.s
- Nitrogen (Kjeldahl): 3.06%
- Free furfuryl alcohol (G.C.): 23.2%
- Water (Karl Fischer): 11.8%
- Free formaldehyde: 0.36 %

**Example 8** - **Resin NS-2B** (not according to the invention: excess of formaldehyde abatement performed with 4,4'-isopropylidenediphenol and urea).

### Recipe:

| | |
|---|---|
| a) Furfuryl alcohol | 388.37 g |
| b) Paraformaldehyde (89-91% formaldehyde) | 92.41 g |
| c) Water | 2.76 g |
| d) Sodium hydroxide, 30% aqueous solution | 3.10 g |
| e) Dibutyl phosphate | 5.19 g |
| f) 4,4'-isopropylidenediphenol | 16.72 g |
| g) Potassium hydroxide, 48% aqueous solution | 11.51 g |
| h) Urea | 10.48 g |
| i) 3-aminopropylmethyldiethoxysilane | 1.13 g |
| j) Water | 20.51 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain the reflux (pH = 4.2-4.7) until achievement of a free furfuryl alcohol content comprised between 22 and 25% (gas chromatographic control)
- Cool down to 80° C
- Charge raw materials f) g) and maintain at 80° C for 1 hour
- Cool down to 60° C
- Charge raw material h)
- Maintain at 50-60° C for 1 hour
- Charge raw material i)
- Cool down to 35° C
- Charge raw material j)

The resin is clear and has the following characteristics:
- pH at 25° C: 9.8
- Viscosity a 20° C: 130 mPa.s
- Nitrogen (Kjeldahl): 0.88%
- Free furfuryl alcohol (G.C.): 22.6%
- Water (Karl Fischer): 11.9%
- Free formaldehyde: 0.16 %

### Example 9 - Resin NS-2C (according to the invention)

### Recipe

| | |
|---|---|
| a) Furfuryl alcohol | 388.37 g |
| b) Paraformaldehyde (89-91% formaldehyde) | 92.41 g |
| c) Water | 2.76 g |
| d) Sodium hydroxide, 30% aqueous solution | 3.10 g |
| e) Dibutyl phosphate | 5.19 g |
| f) Sodium hydroxide, 30% aqueous solution | 24.59 g |
| g) Urea | 5.21 g |
| h) 3-aminopropylmethyldiethoxysilane | 1.08 g |

### Processing standards:

- Charge raw materials a) b) c) d) e) in a reactor equipped with a reflux condenser
- Start the stirrer and keep it running throughout the manufacturing duration
- Start the heating and bring to reflux (120-125° C) in 40-60'
- Maintain reflux (pH = 4.2-4.7) until achievement of a free furfuryl alcohol content comprised between 22 and 25% (gas chromatographic control)
- Cool down to 100° C
- Slowly charge raw material f)
- Bring back to reflux
- Maintain the reflux (103-105° C) for 25'
- Cool down to 60° C
- Charge raw material g)
- Maintain at 50-60° C for 1 hour
- Charge raw material h)
- Cool down to 35° C

The resin is clear and has the following characteristics:
- pH at 25° C: 9.2
- Viscosity at 20° C: 140 mPa.s
- Nitrogen (Kjeldahl): 0.46%
- Free furfuryl alcohol (G.C.): 24.3%
- Water (Karl Fischer): 11.7%
- Free formaldehyde: 0.05 %

### Example 10 - Comparative example: storage stability (Shelf life)

In order to assess the shelf life of the resins according to the invention, an attempt was made to simulate the extreme conditions under which the goods are subjected during the transport by sea: some resin samples, placed in sealed containers, were stored at a temperature of 55° C. The viscosity was measured at regular intervals, at 20° C, noting down any changes in homogeneity.

The results are listed in table 1 below:

**Table 1**

| | Resin NS-1B (not according to the invention) | Resin NS-1C (according to the invention) |
|---|---|---|
| Viscosity at 20° C, initial | 140 mPa.s | 140 mPa.s |
| Viscosity a 20° C, after 14 days | 160 mPa.s | 140 mPa.s |
| Viscosity at 20° C, after 30 days | 170 mPa.s | 140 mPa.s |

The samples maintained their homogeneity in the extreme test conditions. The negligible or absent increase in viscosity ensures at least 6 months stability at standard storage temperatures. In any case, the behavior of the sample according to the invention is at least equal, or better than that of the sample not according to the invention.

### Technological tests

Composition of the mixtures:
100 parts by weight of French silica sand LA 32
0.4 parts by weight of p-toluenesulfonic acid, 65% aqueous solution
1.0 parts by weight of resin

The mixtures were set up in a laboratory using a rapid KitchenAid Artisan mixer. With the above mentioned mixtures, standard +GF+ bars were set up, having a square break section of 5 cm².

The flexural strength of said bars was measured after 3, 5 and 24 hours after the discharge of the mixture form the mixer, using a BENET (mod. COE) device.

It has to be considered that the formaldehyde presence positively affects the performance of the binder systems. As a result, the furan resins according to the present invention, which are almost free of formaldehyde, have inferior strengths in laboratory tests when compared to traditional resins, richer in formaldehyde. However, under the operative conditions in the foundry, the differences in strength cancel out thanks to the use of recovered sands and rapid mixers that minimize the contact time between resin and hardener during the mixing.

Thus, practice tests in the foundry clearly showed that the use of binders with very low formaldehyde content does not require any further resin addition to compensate for the decrease in strength found in the laboratory.

The table 2 below summarizes the results obtained:

**Table 2**

| Resin | Free Formaldehyde % | Room Temperature ° C | Relative Humidity % | Set time | | Flexural strength, N/cm² after: | | |
|---|---|---|---|---|---|---|---|---|
| | | | | start | fine | 3 hrs | 5 hrs | 24 hrs |
| NS-1A | 0.60 | 18 | 43 | 12' | 17' | 230 | 280 | 335 |
| NS-1B | 0.76 | 19 | 47 | 9' | 14' | 220 | 330 | 375 |
| NS-1C (*) | 0.03 | 18 | 46 | 13' | 20' | 270 | 290 | 320 |
| NS-3A | 0.17 | 17 | 46 | 12' | 18' | 190 | 220 | 265 |
| NS-3B | 0.33 | 18 | 46 | 10' | 14' | 270 | 330 | 355 |
| NS-3C (*) | 0.01 | 18 | 44 | 10' | 14' | 290 | 320 | 330 |

| | | | | | | | | |
|---|---|---|---|---|---|---|---|---|
| (*) examples according to the invention | | | | | | | | |

The results show a good performance of the resins according to the invention (NS-1C and NS-3C) as foundry binders despite their formaldehyde content being much lower than that of the resins not according to the invention (NS-1A, NS-1B, NS-3A, NS-3B).

### Example 11 - Measurement of the formaldehyde developed during curing

To establish the existence of a relationship between the formaldehyde content of a binder system and the amount of formaldehyde developed under conditions of use in the foundry, a measurement of the formaldehyde developed during curing of the resins of Examples NS-1A, NS-1B and NS-1C was performed.

### Equipment

Laboratory grazing arm mixer, of approximately 7 liter capacity, equipped with a removable lid. The lid is fitted, in proximity to the outer edge, of:
- a circular hole, ø 30 mm, for charging the hardener and the resin, and for air inlet during the sampling;
- two circular holes, ø 23 mm, for the sealed insertion of the flexible suction pipes of two samplers. The two holes are close to each other and diametrically opposed to the 30 mm hole.

### Composition of the mixture

It is the same composition as specified for the technological tests.

### Sampling procedure

- Charge the sand (2500 grams) into the mixer and close the lid
- Connect the suction pipes of the two samplers to the two holes in the lid
- Turn off the air conditioner and the room exhaust hood
- Start the mixer and let it run throughout the test
- Start the samplers
- Charge the hardener through the 30 mm hole in the lid
- Let stir for 60"
- Charge the resin through the 30 mm hole in the lid
- After 45', turn off the samplers and the mixer.

### Results:

The results of the gas chromatographic parameters analyzed for the air samples aspirated during the binder curing reaction are summarized in the table 3 below. The gas-chromatographic determination of the formaldehyde content in said air samples was performed according to US EPA 11A method, i.e. according to the method routinely used for determining the concentration of formaldehyde in workplaces.

**Table 3**

| | NS-1A | NS-1B | NS-1C |
|---|---|---|---|
| Volume of aspired air, Nliters | 17 | 17 | 17 |
| Formaldehyde, mg | 1.53 | 2.57 | 0.27 |

The results clearly show that the resin according to the invention (NS-1C), not only has a lower formaldehyde content compared to the two resins (NS-1A and NS-1B) not according to the invention, but also produces a significantly lower formaldehyde emission in the air, under the conditions of use in the foundry.

### Example 12 - Resin NS-2D (according to the invention, furfuryl alcohol lower than 13.5%)

### Recipe

| | |
|---|---|
| a) Furfuryl alcohol | 388.37 g |
| b) Paraformaldehyde (89-91% formaldehyde) | 171.47 g |
| c) Water | 7.68 g |
| d) Sodium hydroxide, 30% aqueous solution | 4.47 g |
| e) Benzoic acid | 15.04 g |
| f) Sodium hydroxide, 30% aqueous solution | 46.70 g |
| g) Urea | 6.40 g |
| h) 3-aminopropylmethyldiethoxysilane | 1.28 g |

### Processing standards:

- Charge raw materials a) b) c), 30% by weight of raw material of point d) and raw material e) in a reactor equipped with a reflux condenser
- Start the stirrer and keep it running throughout the manufacturing duration
- Heat to reflux (120-125° C) in 40-60'
- Maintain the reflux (prescribed pH 5.0-5.5) double-checking the pH every hour, and bring it back to the prescribed range with further additions of raw material d) until achievement of a free furfuryl alcohol content comprised between 11 and 13% (gas chromatographic control)
- Cool down to 100° C
- Slowly charge raw material f)
- Bring back to reflux
- Maintain the reflux (103-105° C) for 25'
- Cool down to 60° C
- Charge raw material g)
- Maintain at 50-60° C for 1 hour
- Charge raw material h)
- Cool down to 35° C

The resin is clear and has the following characteristics:
- pH at 25° C: 7.2
- Viscosity at 20° C: 230 mPa.s
- Nitrogen (Kjeldahl): 0.46%
- Free furfuryl alcohol (G.C.): 12.1%
- Water (Karl Fischer): 12.5%

## Claims

1. Method for the production of furan resins comprising the following steps:
a) reaction between furfuryl alcohol and formaldehyde in the presence of an acid catalyst;
b) heat treatment with a strong base of the condensation polymer formed in step a), performed at a temperature comprised between 90° C and 115° C;
c) addition of urea;
and not comprising the addition of 4,4'-isopropylidenediphenol.

2. Method according to claim 1, wherein the acid catalyst of step a) is an organic acid with a pKa at 25° C greater than or equal to 2.5 and/or a salt thereof, preferably with a pKa at 25° C comprised in the range of from 2.75 to 6, and even more preferably with a pKa at 25° C comprised in the range of from 3 to 5.

3. Method according to claim 1, wherein the acid catalyst of step a) is an acid alkyl ester of phosphorous acid and/or phosphoric acid and/or a salt thereof.

4. Method according to claim 1, wherein at the end of step a) formaldehyde is present in an amount comprised between 3% and 6% by weight, based on the weight of the material contained in the reactor.

5. Method according to claim 1, wherein the strong base in step b) is selected from sodium hydroxide, potassium hydroxide, or calcium hydroxide, preferably sodium hydroxide.

6. Method according to claim 1, wherein in step b) the strong base is added in an amount comprised between 35% and 80% of the stoichiometric amount of the formaldehyde present.

7. Method according to claim 1, wherein step b) is performed at a temperature comprised between 103° C and 105° C.

8. Method according to claim 1, wherein the pH at the end of step b) is comprised between 7 and 10.

9. Method according to claim 1, wherein the amount of free formaldehyde at the end of step b) is comprised between 0.3% and 0.6% by weight, based on the total weight of the furan resin obtained.

10. Method according to claim 1, wherein the amount of urea added in step c) is not more than 4.3% by weight, preferably not more than 2.2% by weight, based on the weight of the finished resin.

11. Method according to any one of the preceding claims, wherein the amount of urea added in step c) is stoichiometric with respect to the remaining formaldehyde.

12. Method according to claim 1, **characterized by** comprising the additional steps of:
d) cooling;
e) addition of silane compounds;
wherein said steps d) and e) are preferably performed simultaneously.

13. Method according to claim 12, wherein the silane compounds are 3-aminopropyltriethoxysilane, 3-aminopropylmethyldiethoxysilane, and/or 3-glycidoxypropyltrimethoxysilane.

14. Method according to anyone of the preceding claims, **characterized by** being performed in presence of water.

15. Furan resins obtainable according to the method of any one of claims 1-14, **characterized by** comprising a free formaldehyde percentage lower than 0.1% by weight, based on the weight of the furan resin, whereby said free-formaldehyde is measured using the method described in the present description.

16. Furan resins according to claim 15, **characterized by** comprising a nitrogen percentage lower than 2% by weight, preferably lower than 1% by weight, , whereby the Kjeldahl method is used to measure nitrogen content, and furfuryl alcohol lower than 25% by weight, preferably lower than 13.5% by weight, based on the weight of the furan resin.

## Patentansprüche

1. Verfahren zur Herstellung von Furanharzen, welches die folgenden Schritte umfasst:
a) Reaktion zwischen Furfurylalkohol und Formaldehyd in Gegenwart eines sauren Katalysators;
b) Wärmebehandlung des in Schritt a) gebildeten Kondensationspolymers mit einer starken Base bei einer Temperatur zwischen 90°C und 115°C;
c) Zugabe von Harnstoff;
und ohne Zugabe von 4,4'-Isopropylidendiphenol.

2. Verfahren nach Anspruch 1, wobei der Säurekatalysator aus Schritt a) eine organische Säure mit einem pKa-Wert bei 25°C größer oder gleich 2,5 und/oder ein Salz davon ist, vorzugsweise mit einem pKa-Wert bei 25°C im Bereich von 2,75 bis 6 und noch bevorzugter mit einem pKa-Wert bei 25°C im Bereich von 3 bis 5.

3. Verfahren nach Anspruch 1, wobei der Säurekatalysator aus Schritt a) ein saurer Alkylester von Phosphorsäure und/oder Phosphorsäure und/oder ein Salz davon ist.

4. Verfahren nach Anspruch 1, wobei am Ende von Schritt a) Formaldehyd in einer Menge von 3 bis 6 Gew.-%, bezogen auf das Gewicht des im Reaktor enthaltenen Materials, vorhanden ist.

5. Verfahren nach Anspruch 1, wobei die starke Base in Schritt b) aus Natriumhydroxid, Kaliumhydroxid oder Calciumhydroxid, vorzugsweise Natriumhydroxid ausgewählt ist.

6. Verfahren nach Anspruch 1, wobei in Schritt b) die starke Base in einer Menge von 35 bis 80 % der stöchiometrischen Menge des vorhandenen Formaldehyds zugegeben wird.

7. Verfahren nach Anspruch 1, wobei Schritt b) bei einer Temperatur zwischen 103°C und 105°C durchgeführt wird.

8. Verfahren nach Anspruch 1, wobei der pH-Wert am Ende von Schritt b) zwischen 7 und 10 liegt.

9. Verfahren nach Anspruch 1, wobei die Menge an freiem Formaldehyd am Ende von Schritt b) zwischen 0,3 Gew.-% und 0,6 Gew.-%, bezogen auf das Gesamtgewicht des erhaltenen Furanharzes, beträgt.

10. Verfahren nach Anspruch 1, wobei die in Schritt c) zugegebene Menge an Harnstoff nicht mehr als 4,3 Gew.-%, vorzugsweise nicht mehr als 2,2 Gew.-%, bezogen auf das Gewicht des fertigen Harzes, beträgt.

11. Verfahren nach einem der vorstehenden Ansprüche, wobei die in Schritt c) zugegebene Menge an Harnstoff stöchiometrisch zu dem verbleibenden Formaldehyd ist.

12. Verfahren nach Anspruch 1, **gekennzeichnet durch** die folgenden zusätzlichen Schritte:
d) Abkühlen;
e) Zugabe von Silanverbindungen;
wobei die Schritte d) und e) vorzugsweise gleichzeitig durchgeführt werden.

13. Verfahren nach Anspruch 12, wobei die Silanverbindungen 3-Aminopropyltriethoxysilan, 3-Aminopropylmethyldiethoxysilan und/oder 3-Glycidoxypropyltrimethoxysilan sind.

14. Verfahren nach einem der vorstehenden Ansprüche, **dadurch gekennzeichnet, dass** es in Gegenwart von Wasser durchgeführt wird.

15. Furanharze, erhältlich nach dem Verfahren nach einem der Ansprüche 1 bis 14, **dadurch gekennzeichnet, dass** sie einen Gehalt an freiem Formaldehyd von weniger als 0,1 Gew.-%, bezogen auf das Gewicht des Furanharzes, aufweisen, wobei der Gehalt an freiem Formaldehyd nach dem in der vorliegenden Beschreibung beschriebenen Verfahren gemessen wird.

16. Furanharze nach Anspruch 15, **dadurch gekennzeichnet, dass** sie einen Stickstoffanteil von weniger als 2 Gew.-%, vorzugsweise weniger als 1 Gew.-%, wobei der Stickstoffgehalt nach der Kjeldahl-Methode gemessen wird, und Furfurylalkohol von weniger als 25 Gew.-%, vorzugsweise weniger als 13,5 Gew.-%, bezogen auf das Gewicht des Furanharzes, enthalten.

## Revendications

1. Procédé de production de résines furaniques comprenant les étapes suivantes :
a) réaction entre l'alcool furfurylique et le formaldéhyde en présence d'un catalyseur acide ;
b) traitement thermique avec une base forte du polymère de condensation formé à l'étape a), effectué à une température comprise entre 90°C et 115°C ;
c) l'ajout d'urée ;
et ne comprenant pas l'addition de 4,4'-isopropylidènediphénol.

2. Procédé selon la revendication 1, dans lequel le catalyseur acide de l'étape a) est un acide organique dont le pKa à 25°C est supérieur ou égal à 2,5 et/ou un de ses sels, de préférence dont le pKa à 25°C est compris entre 2,75 et 6, et plus préférentiellement encore dont le pKa à 25°C est compris entre 3 et 5.

3. Procédé selon la revendication 1, dans lequel le catalyseur acide de l'étape a) est un ester alkyl acide de l'acide phosphoreux et/ou de l'acide phosphorique et/ou d'un de leurs sels.

4. Procédé selon la revendication 1, dans lequel, à la fin de l'étape a), le formaldéhyde est présent dans une quantité comprise entre 3% et 6% en poids, par rapport au poids de la matière contenue dans le réacteur.

5. Procédé selon la revendication 1, dans lequel la base forte à l'étape b) est choisie parmi l'hydroxyde de sodium, l'hydroxyde de potassium ou l'hydroxyde de calcium, de préférence l'hydroxyde de sodium.

6. Procédé selon la revendication 1, dans lequel, à l'étape b), la base forte est ajoutée en une quantité comprise entre 35% et 80% de la quantité stœchiométrique du formaldéhyde présent.

7. Procédé selon la revendication 1, dans lequel l'étape b) est réalisée à une température comprise entre 103°C et 105°C.

8. Procédé selon la revendication 1, dans lequel le pH à la fin de l'étape b) est compris entre 7 et 10.

9. Procédé selon la revendication 1, dans lequel la quantité de formaldéhyde libre à la fin de l'étape b) est comprise entre 0,3% et 0,6% en poids, par rapport au poids total de la résine furanique obtenue.

10. Procédé selon la revendication 1, dans lequel la quantité d'urée ajoutée à l'étape c) n'est pas supérieure à 4,3% en poids, de préférence pas supérieure à 2,2% en poids, par rapport au poids de la résine finie.

11. Procédé selon l'une quelconque des revendications précédentes, dans lequel la quantité d'urée ajoutée à l'étape c) est stœchiométrique par rapport au formaldéhyde restant.

12. Procédé selon la revendication 1, **caractérisée par le fait qu'**il comprend les étapes supplémentaires suivantes :
d) le refroidissement ;
e) l'ajout de composés de silane ;
dans lequel les étapes d) et e) sont de préférence effectuées simultanément.

13. Procédé selon la revendication 12, dans lequel les composés de silane sont le 3-aminopropyltriethoxysilane, le 3-aminopropylméthyldiethoxysilane, et/ou le 3-glycidoxypropyltrimethoxysilane.

14. Procédé selon l'une quelconque des revendications précédentes, **caractérisée par le fait qu'**il est réalisé en présence d'eau.

15. Résines furaniques pouvant être obtenues selon le procédé de l'une quelconque des revendications 1 à 14, **caractérisées par le fait qu'**elles comprennent un pourcentage de formaldéhyde libre inférieur à 0,1% en poids, par rapport au poids de la résine furanique, ledit formaldéhyde libre étant mesuré à l'aide du procédé décrit dans la présente description.

16. Résines furaniques selon la revendication 15, **caractérisées par** un pourcentage d'azote inférieur à 2% en poids, de préférence inférieur à 1% en poids, le procédé Kjeldahl étant utilisé pour mesurer la teneur en azote, et un alcool furfurylique inférieur à 25% en poids, de préférence inférieur à 13,5% en poids, par rapport au poids de la résine furanique.
